# EUROPEAN PATENT APPLICATION

(11) **EP 2 962 573 A1**
(43) Date of publication of application: **06.01.2016**
(21) Application number: 15174226.9
(22) Date of filing: 29.06.2015
(51) Int. Cl.: A23B 7/154, A23B 7/08

(54) **METHOD FOR EXTENDING SHELF LIFE OF FRESH FOOD PRODUCTS**

(30) Priority: 01.07.2014 IT MI20141194
(71) Applicant: Corrias, Carlo, 09098 Terralba (OR) (IT)
(72) Inventor: Corrias, Carlo, 09098 Terralba (OR) (IT)
(74) Representative: Mittler, Andrea

(57) **Abstract**

A method is described for preserving a fresh food product extending the shelf life of organoleptic, physical and alimentary properties of the fresh food product, comprising at least three steps in sequence, one step of cleaning residues from the fresh food product by washing said fresh food product with a liquid washing solution, a phase of immersion of said fresh food product in a mixture of water and honey at low concentration for a short immersion time comprising between 20 seconds and 100 seconds, said mixture of water and honey at low concentration provides that the honey has a concentration comprising between 10 grams per liter of water and 100 grams per liter of water, a step of refrigerating the fresh food product at a refrigeration temperature higher than zero degrees Celsius.

## Description

The present invention relates to a method for extending the shelf life of fresh food products, in particular of fresh vegetables and fresh fruit.

Extending the shelf life of fresh food products, such as fresh fruit and vegetables, allows to extend a time for which they maintain their external appearance and the organoleptic, alimentary and physical properties of fresh fruit and vegetables.

Extending the shelf life of food products does not only mean extending the "best before" date by which some of the properties of the food product will have deteriorated beyond a predetermined threshold such to no longer allow healthy or safe consumption, but also extending the shelf life, i.e. the time for which the food product can be displayed on a shelf available for selling to the public.

The shelf life of the food product is a period of time during which the appearance the food product, such as fresh fruit and fresh vegetables, is not deteriorated even in terms of exterior physical appearance and of organoleptic and alimentary properties, thus remaining appealing for selling to the public.

The shelf life is the preservation time interval beyond which the fresh food product disadvantageously starts to deteriorate, thus losing some specific organoleptic properties of the fresh food product. Once the shelf life has passed, other physical properties are also lost, such as smell, color, consistency of the fresh fruit or vegetables, and other alimentary properties typical of fresh fruit and fresh vegetables, making the food products unappealing for display for selling to the public although the best before date is still to come. Once the shelf life has passed, the properties typical of the fresh food product are lost.

Losing the specific properties of the fresh food product also consists in allowing the onset of oxidizing processes, which lead to an enzymatic browning of the food product, in particular for fresh food products such as fresh vegetables, for example artichokes, fennels, cauliflowers, potatoes, bell peppers, asparagus, carrots, onions, celery, pumpkins and other fresh fruit, to the extent of causing a subsequent severe deterioration of the organoleptic, alimentary and physical properties and a decrease of the shelf life of the fresh food product.

Methods for extending the shelf life are known in the prior art, which use chemical synthesis products on food products for the purpose of limiting the oxidation processes which cause, for example, enzymatic browning and with the purpose of slowing down the microbiological development, which alters the flavor and external color of the food product, thus also altering the organoleptic, alimentary and physical properties of the food product itself.

Disadvantageously, said methods which use chemical substances synthesized in laboratory, such as for example citric acid, lactic acid, ascorbic acid and sulphites, partially alter some organoleptic, alimentary and physical properties of the fresh food product.

For example, the use of chemical substances synthesized in laboratory may disadvantageously cause softening and shriveling of the fresh food product, because they break down the cell walls and lead to a reduction of tissue rigidity of the fresh food product, alteration of the texture, color and nature of an outer portion of the food product itself, sometimes preventing the consumption of the external part without conveniently washing it.

Furthermore, some chemical substances synthesized in laboratory used in said processes of the prior art, such as sulphites, are deemed unsuitable for alimentary use because they are considered dangerous for human health by some national and international public authorities.

The methods of the prior art also include packaging the food product in a protective atmosphere or using chemical substances synthesized in laboratory, such as chemical antioxidants or metal deactivators.

For example, the use of chemical substances synthesized in laboratory may limit the respiration of the food product itself sometimes preventing to perceive the smell of the fresh fruit or fresh vegetables and may result unappealing to a public of consumers who demand fresh food products, so-called "fourth range" products.

Further methods are known in the prior art which include submerging some types of food products in a liquid solution comprising sugars in various percentage by weight for a very long immersion time, which may span from a few hours to even several days. These methods are used to transform a fresh food product into a long life food product.

The food product which passes through these processes of the prior art is preserved longer but the organoleptic, alimentary and physical properties of the fresh food product are either lost or altered. Said fresh food product properties are disadvantageously altered to the extent that said food products cannot be identified as fresh food products once the methods of the prior art have been applied. For example, some of said known methods add a content of sugar to even considerable portions of the food product, altering the organoleptic, alimentary and physical properties thereof, to the extent that the food product is at least in part dehydrated.

Disadvantageously, the fresh food products treated according to the methods of the prior art, even with the use of chemical synthesis products, do not allow to extend the shelf life of the fresh food products, such as fresh fruit and fresh vegetables, in a considerable manner. The methods of the prior art allow very short and greatly limited shelf lives of the fresh food products from 6 to 8 days at the most.

It is the object of the present invention to provide a method for greatly increasing the shelf life of a fresh food product, such as fresh fruit and fresh vegetables, greatly increasing the shelf life of the fresh food product, maintaining the organoleptic, physical and alimentary properties of the fresh food product for a much longer time, strongly limiting and slowing down the tissue oxidation of the fresh food product for a much longer period of time, limiting and reducing enzymatic browning for a much longer period of time, limiting and slowing down the microbial development for a much longer period of time, allowing the respiration of the fresh food product using neither antioxidant products made by chemical synthesis in laboratory nor metal deactivators made by chemical synthesis in laboratory.

According to the invention, such objects are achieved by a method for preserving a fresh food product extending a shelf life and a preservation time of organoleptic, alimentary and physical features of the fresh food product according to claim 1.

These and other features of the present invention will become further apparent from the following detailed description of practical embodiments thereof shown by way of non-limiting example for fresh food products.

A method according to the present invention relates to a fresh food product with a very short shelf life over time, which is thus very perishable.

Fresh food products with short shelf life are, for example, fresh vegetables such as artichokes, fennels, cauliflowers, potatoes, bell peppers, asparagus, carrots, onions, celery, pumpkins and fresh fruit.

As for all these fresh food products, the shelf lives of fresh artichokes are very short because of the brown discoloration in correspondence of the cut surfaces of the artichoke due to the action of a polyphenol oxidase enzyme. Said discoloration is also known as enzymatic browning.

When the shelf life of a fresh food product, such as, for example, a fresh artichoke, is passed, bad odors and flavor alterations are formed due to the anaerobic respiration or to the activity of microorganisms which compromise the organoleptic, alimentary and physical properties of the fresh food product.

A method of processing a fresh artichoke includes a step of calibrating and a step of partial defoliation of the fresh food product to eliminate the parts which are not used for consumption as food. Other fresh vegetables and fresh fruit may have typical processing steps described in the prior art.

A process for preserving fresh food products, such as fresh artichokes, fennels, cauliflowers, potatoes, bell peppers, asparagus, carrots, onions, celery, pumpkins and fresh fruit, is then performed to extend the shelf life of the fresh food products according to the present invention. Said process for preserving the fresh food product comprises a first step of cleaning residues from the fresh food product, a second step of rinsing, a third step of immersing, a fourth step of drying the fresh food product, and a fifth step of sprinkling vegetable oil on the fresh food product.

With regards to the fresh food product preservation process to extend the shelf life of the fresh food product, the first step of cleaning residues includes washing the fresh food product in a liquid washing water solution. Washing the fresh food product with said liquid washing water solution advantageously contributes to sanitizing the fresh food product by reducing any residues present on the outer portion of the fresh food product. Said residues may be water-soluble pesticides, soil and earth, bacterial contamination or fungal contamination.

In the most advantageous technical solution, said washing water solution is a chlorinated potable water solution, with percentages of free chlorine from 20 mg/l to 150 mg/l. Under 20 mg/l, it has been noted that the fresh food products particularly fouled with said residues are not sufficiently washed to be cleaned. Much over 150 mg/l, it has been noted that the chlorine may contribute to damaging an external portion of the food product. A low concentration of chlorine under 150 mg/l was chosen as safety threshold to avoid contributing to deteriorating the organoleptic, physical and alimentary properties of the fresh food product.

Alternatively, the washing water solution may be a solution of potable water with added chlorine dioxide, in which the chlorine is present in concentrations from 1 mg/l to 3 mg/l. These limits of chlorine concentration were chosen for the reasons indicated above for the chlorinated potable water solution.

In another alternative, the washing water solution is a solution of potable water added with ozone or with peracetic acid at low concentrations for the reasons expressed above in relation to the chlorinated potable water solution.

The washing water solution is preferably refrigerated at a washing temperature from 5 to 6 degrees Celsius to promote a tissue healing of the external portions of fresh food products. Scars to the tissues of the external portions of the fresh food products may be caused, for example, by cuts or shocks during any step of the process of harvesting and processing the fresh food product itself.

The process for extending the shelf life of fresh food products includes the second step of rinsing the fresh food product to remove the washing water solution. The rinsing is preferably performed using potable water. Preferably, the temperature of the potable rinsing water is from 4 to 6 degrees Celsius to promote the tissue healing of the external portions of the fresh food products. The rinsing is useful to prevent the washing water solution from coming into contact with an antioxidant solution used in the third step of the process for extending the shelf life of the fresh food product.

The potable rinsing water and the liquid washing solution have the same temperature from 4 to 6 degrees Celsius to avoid the fresh food product from being subjected to thermal shocks which could compromise the physical and color properties of the fresh food product.

The first step of washing residues and the second step of rinsing are not sufficient to extend the shelf life of the fresh food product considerably beyond 8 days. Indeed, experiments performed by the applicant on artichokes, fennels, cauliflowers, potatoes, bell peppers, asparagus, carrots, onions, celery, pumpkins and fresh fruit indicate that the fresh food product starts to oxidize already during the first days after the treatment, thus passing the shelf life and compromising the preservation of the fresh food product.

The third immersion step includes using a mixture of water and honey in which the fresh food product is briefly immersed, and obtaining a surprising synergistic effect of extending the shelf life of the fresh food product itself.

Natural honey comprises abundant amounts of polyphenol and flavonoid molecules. There is a relation between the antioxidant power of natural honey and the amount of polyphenol and flavonoid molecules. Honey performs an antioxidant action and has an antimicrobial effect due to the high content of inhibins, which considerably limit the action of microorganisms thus preventing alterations of the treated product and contributing to extending the shelf life of the food product itself.

Mixed flower honey is preferably used for its high degree of concentration of polyphenol and flavonoid molecules, but other types of natural honey may also be used.

The mixture of water and honey is prepared by dissolving an amount of raw honey in water in variable percentage by weight according to the fresh food product to be treated.

The percentage of raw honey in the mixture of water and honey is a low concentration of honey from 10 grams per liter of water to 100 grams per liter of water. For fresh artichokes, the percentage by weight of honey is from 20 to 40 grams per liter of water. A high concentration of honey in the mixture is not needed to obtain the surprising effect of extending the shelf life of the fresh food products, but a low concentration is sufficient.

A high concentration of honey in the mixture higher than 100 grams per liter of water would risk altering the organoleptic, alimentary and physical properties of the fresh food product, risking to dehydrate the portions of the fresh food product in contact with the water and honey mixture at high concentration.

A concentration of honey in the mixture lower than 10 grams per liter of water does not allow to increase the shelf life beyond 8 days.

The water and honey mixing operation is preferably performed in a tank provided with a slow spiral flow stirrer, which actuates at least one mixing blade for a mixing time.

The mixing water is preferably at a temperature of the mixing water from 4 to 50 degrees Celsius.

Mixture water temperatures higher than 30 degrees Celsius contribute to reducing the mixing time by exploiting the heat of the water itself.

The mixing time intervals are longer at mixing temperatures lower than 30 degrees Celsius.

At mixing water temperatures lower than 4 degrees Celsius, an alteration of the organoleptic properties of the fresh food product immersed into the water and honey mixture was noted, alterations caused by chilling the external portions of the fresh food product for shelf lives shorter than 10 days being found.

Instead, at temperatures higher than 50 degrees Celsius, the water and honey mixture is heated excessively, risking to alter the organoleptic properties of the water and honey mixture at low concentration.

The optimal mixing time is 5 minutes using two mixing blades and the water of the mixture at the mixing temperature from 30 to 50 degrees Celsius, so as to allow a homogenous mixture to be obtained. Different mixing time intervals may be provided, e.g. a shorter mixing time, providing a number of mixing blades higher than two or different temperatures.

The mixture of water and honey at low concentration is obtained once the honey has been diluted in water.

A step of cooling the portion of said water and honey mixture at low concentration is then included, during which the mixture is cooled, shifting from the mixture temperature from 30 to 50 degrees Celsius to an immersion temperature from 4 to 6 degrees Celsius to come into contact with the food product and advantageously avoid the food product itself from being subjected to thermal shocks.

A portion of said water and honey at low concentration at the immersion temperature is then transferred into the washing tank for the immersion step.

Said portion of said water and honey mixture is transferred to the washing tank in a ratio equal to 2 parts by volume of water and honey mixture with respect to 1 part by volume of fresh food product. Said ratio is preferential so as to allow the fresh food product to be immersed completely without wasting water and honey mixture.

The fresh food product is completely immersed in the washing tank for a brief immersion time from 10 to 120 seconds. Said immersion time is surprisingly brief, but has the surprising technical effect of extending the shelf life of the fresh food product.

Preferably, the best, most advantageous method is that with the brief immersion time from 20 to 100 seconds for fresh artichokes, because this immersion time interval allows to obtain a shelf life of the fresh food product from 15 days to 25 days, which is a shelf life much longer than the 6 or 8 days obtained with the methods of the prior art.

The immersion time cannot be shorter than 10 seconds, otherwise the shelf life of the fresh food product is not considerably increased beyond 8 days.

The immersion time cannot be longer than 120 seconds, otherwise the sugar concentration in the external portion of the fresh food product increases, thus altering the organoleptic properties, such as flavor and smell, and altering the physical properties, such as color, and starts partially dehydrating the external portion of the fresh food product.

The fourth step of drying the fresh food product then follows. After the immersion into the water and honey mixture, the fresh food product is dried by dripping or more efficiently by drying in a centrifuge so as to eliminate the residual water remaining on the fresh food product.

A centrifuge speed is adjustable according to the fresh food product and in particular according to its physical resistance to shocks and its consistency. For fresh artichokes, the centrifuge speed is set to about 600 rpm.

Said step of drying the fresh food product allows to eliminate water residues which could cause damp zones which could harbor bacteria or microbes during the steps of packaging and transporting the fresh food product.

A fifth step of sprinkling the fresh food product with a vegetable oil is then included to obtain a further synergistic technical effect which allows to extend the shelf life of the fresh food product even further.

The vegetable oil is preferably demargarinated, such as for example sunflower seed oil, for contributing to increase the shelf life of the fresh food product in a considerable, synergistic manner thus avoiding alterations of the organoleptic, alimentary and physical properties thereof.

The fresh food product is positioned on a revolving cylinder where sprinklers of said vegetable oil are provided to sprinkle vegetable oil on the external portions of the treated fresh food product.

The oil sprinkling treatment is performed with a system of a plurality of high pressure sprinklers, so as to distribute a film of demargarinated vegetable oil homogeneously on the external portion of the treated fresh food product.

Preferably, a layer of vegetable oil is distributed on the external portion of the fresh food product to an extent from 10 to 15 grams of vegetable oil per kilogram of treated fresh food product, so as not to alter the organoleptic, physical and alimentary properties of the fresh food product and to obtain a shelf life longer than 25 days and up to about 40 days.

Said fifth step of sprinkling with vegetable oil allows to obtain an even higher synergistic effect with the step of immersing the fresh food product, thus surprisingly obtaining shelf lives of the fresh food product even longer than 25 days.

Experiments conducted on artichokes, fennels, cauliflowers, potatoes, bell peppers, asparagus, carrots, onions, celery, pumpkins and other fresh fruit indicate that the shelf life of the fresh food product with a layer of vegetable oil from 10 to 15 grams of vegetable oil per each kilogram of treated fresh food product may surprisingly be boosted to about 40 days.

Then, the processing method includes packaging the fresh food product, and finally the process of preserving the fresh food product while extending the shelf life includes a step of refrigerating the fresh food product under refrigerated conditions at a refrigeration temperature higher than zero degrees Celsius in order to store it.

In order to package the fresh food products, such as for example fresh artichokes, the oxygen must not go under given concentrations to avoid the onset of anaerobic respiration which would compromise the organoleptic, physical and alimentary properties of the fresh food product, such as for example fresh artichokes, and would limit the shelf life. Packaging is not needed for all fresh food products.

The step of refrigerating the fresh food product includes storing the fresh food product, such as fresh artichokes, under refrigerated conditions, thus synergistically contributing to the preservation of the treated fresh food product.

Fresh artichokes, as all other fresh food products, must not be refrigerated at excessively low temperatures, under zero degrees Celsius, otherwise they would undergo chilling damages, such as for example browning or necrosis of the tissues, which would cause the loss of the organoleptic, physical and alimentary properties of the fresh food product.

Instead, the fresh food product, such as for example fresh artichokes, tolerate the normal refrigerating temperatures in common and household refrigerators, i.e. at a cold chain temperature higher than zero degrees Celsius and from 3 to 6 degrees Celsius. Advantageously, said cold chain refrigerating temperature is that normally used in the prior art and is that cold chain temperature at which the fresh food products are normally preserved during the steps of transporting, distributing and selling and during the domestic preservation in a domestic refrigerator.

Advantageously, the process of the present invention extends the shelf life of the fresh food product to an extent from 9 days to 30 days for all fresh food products, in particular for fresh cauliflowers, potatoes, bell peppers, asparagus, carrots, onions, celery and pumpkins. For fresh artichokes and fresh fennels, the shelf life is advantageously increased to about 40 days. An increase of the shelf life beyond 40 days using the method of the present invention may also be expected.

Advantageously, the preservation process for increasing the shelf life according to the present invention is also applied to fresh food products which are cut into a plurality of portions, e.g. fresh artichokes cut into wedges, diced onions, diced carrots, diced fennels, diced fresh celery, diced bell peppers, diced fresh pumpkin.

Empirical tests were performed according to the method of the present invention.

The first empirical test was performed using artichokes cut into wedges which were immersed into the mixture of water and honey for an immersion time of 90 seconds. In the water and honey mixture, the honey had a concentration of 20 grams per liter of water of 2 Brix degrees. The artichokes did not display browning until the thirtieth day after the treatment according to the method of the present invention.

The conditions being equal, if the immersion time was increased to 5 minutes, the artichokes cut into wedges displayed damage of the external leafy part and could no longer be considered fresh artichokes.

A second empirical test was performed with an immersion time of 90 seconds and using concentrations of honey of 80 grams per liter of water with 3.5 degrees Brix. The artichokes displayed browning on the fifteenth day.

In a third empirical test, if the concentration of honey was increased to 180 grams per liter of water, with 5 Brix degrees, the artichokes displayed browning on the seventh day.

Increasing the honey concentration to more than 100 grams per liter of water causes an early browning of the artichokes with respect to the artichokes treated according to the method of the invention.

In a fourth empirical test, the artichokes cut into wedges were immersed for an immersion time of only 5 seconds into a mixture of water and honey with a concentration of honey of 20 grams per liter of water. On the third day, the artichokes already displayed browning and on the fifth day, the artichokes displayed obvious signs of oxidation at the cut portion and leaves.

Considering that in a fifth empirical test the artichokes cut into wedges were not immersed into the mixture of water and honey and on the third day the artichokes already displayed signs of browning, it is apparent that the immersion time of only 5 seconds is not sufficient to increase the shelf life of artichokes.

In a sixth empirical test, the artichokes cut into wedges were immersed for an immersion time of only 10 seconds into a mixture of water and honey with a concentration of honey of 20 grams per liter of water. The artichokes did not display browning until the thirteenth day after the treatment according to the method of the present invention. It is not banal to note that a person skilled in the art would have greatly increased the immersion time in the water and honey mixture to increase the shelf life of the artichokes, while instead it is sufficient to remain within the immersion time intervals of the present invention.

The empirical tests demonstrate that the best, most advantageous technical effects are obtained for immersion time intervals from 20 to 100 seconds, indeed with 20 seconds of immersion in the water and honey mixture with honey concentrations of 20 grams per liter of water, the shelf life increases to twenty-two days, when the first signs of browning are detected on the cut surfaces of the artichokes.

The exceptionally advantageous result of the present invention is obtained by means of a synergistic effect due to the immersion of the artichokes into the water and honey mixture at low concentration for a short immersion time from 20 seconds to 100 seconds, and synergistically because the honey has a concentration from 10 grams per liter of water to 100 grams per liter of water in the water and honey mixture at low concentration.

## Claims

1. Method for preserving a fresh food product extending a shelf life of organoleptic, alimentary and physical properties of the fresh food product, comprising at least three phases in succession,
a phase for cleaning residues from the fresh food product washing said fresh food product with a liquid washing solution,
a phase of immersion of said fresh food product in a mixture of water and honey at low concentration for a short immersion time comprising between 20 seconds and 100 seconds, said mixture of water and honey at low concentration provides that the honey has a concentration comprising between 10 grams per liter of water and 100 grams per liter of water,
a phase to refrigerate the fresh food product at a refrigeration temperature above zero degrees Celsius.

2. Method according to anyone of claim 1, **characterized in that** said mixture of water and honey at low concentration has a temperature comprising between 4 degrees and 50 degrees Celsius, said mixture of water and honey at low concentration being suitable for passing from a mixing temperature comprising between 30 and 50 degrees Celsius to an immersion temperature comprising between 4 and 6 degrees Celsius for coming into contact with the fresh food product.

3. Method according to anyone of the claims 1 or 2, **characterized in that** it provides a phase for sprinkling fresh food product with a vegetable oil, said phase for sprinkling is after said phase of immersion of the fresh food product.

4. Method according to claim 3, **characterized in that** said vegetable oil is in a list comprising an oil without margarine and a sunflower oil, said vegetable oil is sprinkled on an external portion of the fresh food product by an amount comprising between 10 grams and 15 grams of vegetable oil per kilogram of fresh food product.

5. Method according to anyone of the preceding claims, **characterized in that** it provides a phase for wiping up the fresh food product after said phase of immersion, said phase for wiping up provides to eliminate water residuals from an external portion of the fresh food product.

6. Method according to anyone of the preceding claims, **characterized in that** it provides a phase for rinsing the fresh food product with potable water after said phase for cleaning, said phase for rinsing is suitable for removing residues of the liquid washing solution.

7. Method according to anyone of the preceding claims, **characterized in that** said liquid washing solution is a solution in a list comprising a solution of chlorinated potable water at low concentration of chlorine, a solution of potable water with added chlorine dioxide at low concentration of chlorine dioxide, a solution of potable water added with ozone at low concentration of ozone, a solution of potable water added with peroxyacetic acid at low concentration of peroxyacetic acid.

8. Method according to anyone of the claims 6 or 7, **characterized in that** said liquid washing solution has a washing temperature comprising between 4 degrees Celsius and 6 degrees Celsius and the potable water for rinsing has a rinsing temperature comprising between 4 degrees Celsius and 6 degrees Celsius.

9. Method according to anyone of the preceding claims, **characterized in that** said fresh food product is in a list comprising a fresh artichoke, a fresh fennel, a fresh cabbage, a fresh potato, a fresh pepper, a fresh asparagus, a fresh carrot, a fresh onion, a fresh celery, a fresh pumpkin and fresh fruits.

10. Method according to anyone of the claims 6-9, **characterized in that** said solution of chlorinated potable water at low concentration of chlorine has percentages of free chlorine comprised between 20 mg/L and 100 mg/L, the solution of potable water with added chlorine dioxide at low concentration of chlorine dioxide has percentages of chlorine comprised between 1 mg/L and 3 mg/L.
